# EUROPEAN PATENT SPECIFICATION

(11) **EP 2 190 280 B1**
(45) Date of publication and mention of the grant of the patent: **29.03.2017**
(21) Application number: 08786468.2
(22) Date of filing: 25.07.2008
(51) Int. Cl.: A01D 46/28, A23N 15/02

(54) **METHOD FOR ELIMINATING LEAF STALKS FROM A HARVESTED CROP FLOW**
VERFAHREN ZUM ENTFERNEN VON BLATTHALMEN AUS EINEM ERNTEGUTSTROM
PROCÉDÉ POUR ÉLIMINER DES QUEUES D'UN FLUX DE CULTURE RÉCOLTÉE

(30) Priority: 31.07.2007 FR 0705596
(43) Date of publication of application: 02.06.2010
(73) Proprietor: CNH Industrial France, 91150 Morigny-Champigny (FR)
(72) Inventor: NAKAS, Christine, F-85170 Le Poiré-sur-Vie (FR); DEFURNE, Christophe, R., F-85220 La Chapelle Hermier (FR)
(74) Representative: CNH Industrial IP Department
(86) International application number: PCT/EP2008/059810
(87) International publication number: WO 2009/016121

(56) References cited:
- DE-U1- 20 002 935
- FR-A- 2 616 630
- FR-A- 2 796 249
- FR-A- 2 859 074
- GB-A- 1 106 714
- US-A- 4 029 005

## Description

The invention relates to a method of eliminating petioles (leaf stalks) from a harvested stream in a machine for harvesting fruit berries, a sorting device, a extraction conveyor and an elimination system for implementing that method, and a machine for harvesting fruit berries including this kind of elimination system.

The invention applies to the field of mechanised harvesting of fruit growing on trees or bushes, such as grapes, berries, coffee berries, olives or other fruit in particular growing in bunches.

Such fruit is conventionally harvested by a shaker system that straddles a row of plants to detach the harvest. The harvested stream obtained is then conveyed into the machine to be stored in at least one hopper provided for this purpose or in an attached trailer.

However, because of the action of the shaker system, the harvested stream includes, in addition to detached fruit, and among other things, juice, leaves, wood particles, bunches of fruit of various sizes.

To eliminate components other than fruit, in particular leaves and wood particles, harvesting machines include a cleaning system which is adapted to eliminate said components from the stream by suction before it is stored.

Harvesting machines can also carry a sorting device which in particular separates the harvested stream as a function of the size of the components of said stream. Thus by providing such sorting before cleaning, it is possible to suck up only portions containing large components, in particular to avoid sucking up detached fruits.

Moreover, the search for quality in vinification requires the elimination of leaf stalks contained in the harvested stream. However, it is not possible to carry out such elimination in the harvesting machine during cleaning or during sorting.

This is because suction cleaning is based on the difference between the lifts of the components of the stream and sorting is based on the difference between the sizes said components. Now, in the case of leaf stalks, their lift and their size are not sufficiently different from those of fruit berries to be able to clean or sort one without the other, without losing a large number of said berries.

FR-A-2 616 630 shows a system for destemming bunches in a winery. The harvested product is fed into a rotating, perforated drum and engaged by the fingers of an excentrically arranged rotor inside the drum. The berries and the leaf stalks migrate through the perforations and fall onto a sieve surface below the drum. The sieve is vibrated to separate the berries from the stalks. As the stalks have a small diameter, a substantial portion thereof still finds its way through the sieve meshes and gets mixed with the cleaned grapes.

GB 1,106,714 relates to a machine for removing hops from their vines. Plucking rollers tear the hops from the vines and deposit the hops and part of the leaves onto a roller conveyor, constituted by a set of rotating, parallel shafts provided with upright disks. These disks may have a circular or an oval shape. Hops and smaller stalks with leaves fall between the shafts of the conveyor and are received on an oblique cleaning belt. The latter has a number of knobs which hold the stalks, while allowing the hops to roll down to a conveyor belt that finally transports the cleaned hops outside the machine. This is a bulky and complex machine, which is not fit for fruit that is rich in juice such as grapes or berries.

The invention aims to improve on the prior art, in particular by proposing a method of eliminating leaf stalks from a harvested stream, said method being implemented in the harvest machine while recovering the detached berries.

To this end, a first aspect of the invention proposes a method of eliminating leaf stalks from a harvested stream in a machine for harvesting fruit berries, said method successively comprising the steps of:
- feeding the harvested stream to a sorting device through which a stream portion comprising leaf stalks and fruit berries can pass;
- recovering the portion passing through on a conveyor:
- removing from the conveyor components of the passing through portion other than leaf stalks; and
- eliminating leaf stalks remaining on the conveyor,
characterised in that the extraction of components of the portion passing through other than leaf stalks (P) is effected by making use of the height of said components on the conveyor.

A second aspect of the invention proposes a system for implementing the said elimination method, said system comprising:
a sorting device for receiving the harvested stream of fruit berries and through which the stream portion comprising leaf stalks and fruit berries can pass; and
an extraction conveyor disposed under said sorting device for recovering the stream portion passing through the sorting device and removing therefrom the components other than leaf stalks (P), said conveyor comprising a belt driven in a longitudinal direction between an upstream roller and a downstream roller, characterised in that said conveyor further comprises at least one deflector disposed above said belt, said deflector being adapted to remove from the belt components other than leaf stalks.

A third aspect of the invention proposes a machine for harvesting fruit berries comprising a motorised support structure and a harvesting system mounted on said structure, said harvesting system being adapted to detach the harvest, said machine comprising the said elimination system as in the second aspect of the invention, which is fed with a harvested stream coming from the harvesting system.

Other objects and advantages of the invention will emerge in the course of the following description, which is given by way of example, with reference to the accompanying figures, in which:

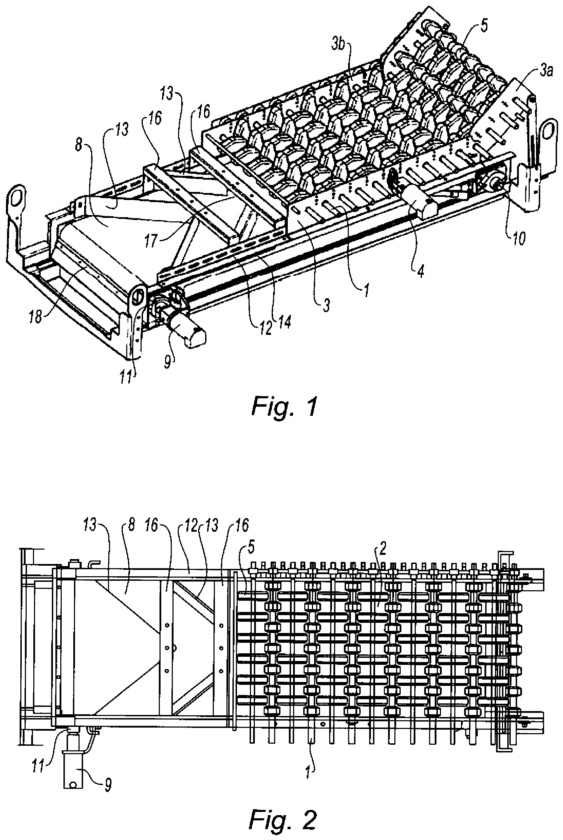

Figure 1 is a perspective view of one embodiment of a system of the invention for eliminating leaf stalks;
Figure 2 is a top view of the elimination system shown in Figure 1;
Figure 3 is a perspective view of the extraction conveyor used in the elimination system shown in Figures 1 and 2;
Figure 4 shows sorter bars of the sorting device used in the elimination system shown in Figures 1 and 2, from above and in side view, driven in rotation, respectively in a position with a nominal distance between centres (Figure 4a), in a transversely offset position (Figure 4b), and in a position with an increased distance between centres (Figure 4c).

The invention relates to a machine for harvesting berries, in particular a grape harvester for mechanised harvesting of grapes, notably for subsequent vinification thereof. A harvester conventionally includes a motorised support structure that is equipped with a driver station and a harvesting system mounted on said structure.

The harvester is designed to straddle at least one row of vines in order, as it moves, to introduce the vine stems successively into the harvesting system, which is adapted to detach the harvest. To this end, the harvesting system includes vine shakers, in particular a series of shakers provided on either side of the space into which the vine stems are introduced.

The harvester also includes a system for continuous recovery of the detached harvest, which includes, in addition to detached grapes, and among other things, juice, leaves, wood particles, bunches of various sizes. In one embodiment, the system includes two bucket conveyors adapted to recover the detached crop under the introduction space and to convey said crop into the upper portion of the harvester.

In the context of vinification of grapes, it is desirable to eliminate leaf stalks P contained in the harvested stream. To this end, there is described hereinafter a system for eliminating leaf stalks P that is adapted to be mounted in the machine to be fed with a harvested stream from the harvesting system. The elimination system can be fed directly with the stream from the harvesting system. Alternatively, it can be fed via a cleaning system and/or a sorting device.

The elimination system includes a sorting device through which a portion of the stream including leaf stalks P and detached fruit berries G is likely to pass. The elimination system also includes, under said sorting device, an extraction conveyor that is adapted to recover on the conveyor the portion passing through and to remove from said conveyor components of the portion passing through other than leaf stalks P. Thus by thereafter eliminating leaf stalks P that remain on the conveyor, the system eliminates leaf stalks P from the harvested stream, recovering in particular detached grapes G.

There is described hereinafter, with reference to the figures, an embodiment of a sorting device adapted to eliminate leaf stalks P. The device is adapted to sort the harvested stream into two layers as a function of the size of the components of said stream. The upper layer containing in particular bunches of fruit is conveyed on the sorting device and the bottom layer containing in particular detached berries G and leaf stalks P passes through said device.

The sorting device includes at least two transverse sorter bars 1, specifically 14 sorter bars 1 in the figures, to which a cyclic relative movement is imparted. The movement is adapted to move the stream longitudinally on said bars by opening passages 2 between them. Moreover, the passages 2 are adapted to enable detached berries G and leaf stalks P to drop under said sorting device. Thus detached berries G and leaf stalks P can be recovered on the extraction conveyor.

As they come into contact with the crop stream, the sorter bars 1 are preferably made from a corrosion-resistant material, in particular a stainless metal or a synthetic material.

In the embodiment described, the sorter bars 1 are mounted on a frame 3 and conjointly driven in rotation about a transverse axis, a motor 4 being associated with the frame for this purpose. The frame 3 also has a downstream part 3a that can be inclined relative to an upstream part 3b, in particular by producing a frame 3 in two parts that are pivotably articulated about a transverse axis. Thus by modifying the inclination it is possible to obtain more benefit from gravity at the end of the movement of the stream over the sorter bars 1, such that sorting is improved.

Furthermore, the stream conveyed on the sorter bars 1, which primarily includes bunches of fruit of various sizes, can be ejected at the end of its movement into a storage hopper provided beyond the downstream part 3a. Alternatively, the search for quality in vinification requiring destemming (debunching) of the grape stream, the stream conveyed on the sorter bars 1 can be fed to a device for separating grapes attached to stalks. Moreover, to facilitate recovery of the ejected stream, the downstream end of the sorting device can extend beyond the extraction conveyor.

The bars 1 carry members 5 whose exterior envelope is not a circle about their rotation axis. Moreover, the members 5 of two adjacent sorter bars 1 are disposed to cooperate to displace the stream longitudinally on said bars while opening passages 2 between them.

To be more precise, the members 5 of a sorter bar 1 are offset angularly and transversely relative to the members 5 of the adjacent bar 1 to form longitudinal passages 2 between a member 5 and the adjacent bar 1 or transverse passages between two adjacent members 5 of a respective bar 1.

As shown in the figures, the geometry of the envelope of the members 5 is inscribed in an ellipse so as to have a radial dimension that is greater than a perpendicular radial dimension. Moreover, the members 5 of two adjacent bars 1 are offset angularly by 90° and transversely by a step greater than the transverse dimension of the members 1. Thus the configuration represented is obtained using a distance between centres of the bars 1 that is greater than half the greater radial dimension of the members 5. Furthermore, in this configuration, alternate sorter bars are disposed transversely in exactly the same manner.

The sorter bars 1 obtained in this way are particularly effective for agitating the harvested stream to be sorted. This is because, as they rotate, the geometry of the members 5 causes a succession of accelerations in various directions.

In the figures, the sorter bars 1 are uniformly distributed on the frame 3. However, the distance between centres of the sorter bars 1 and/or their respective transverse positions can be adjustable in order to modify the geometry of the passages 2. Furthermore, as a function of the characteristics of the stream to be separated, the geometry of the passages 2 can be different as a function of the longitudinal position of the sorter bars on the frame 3.

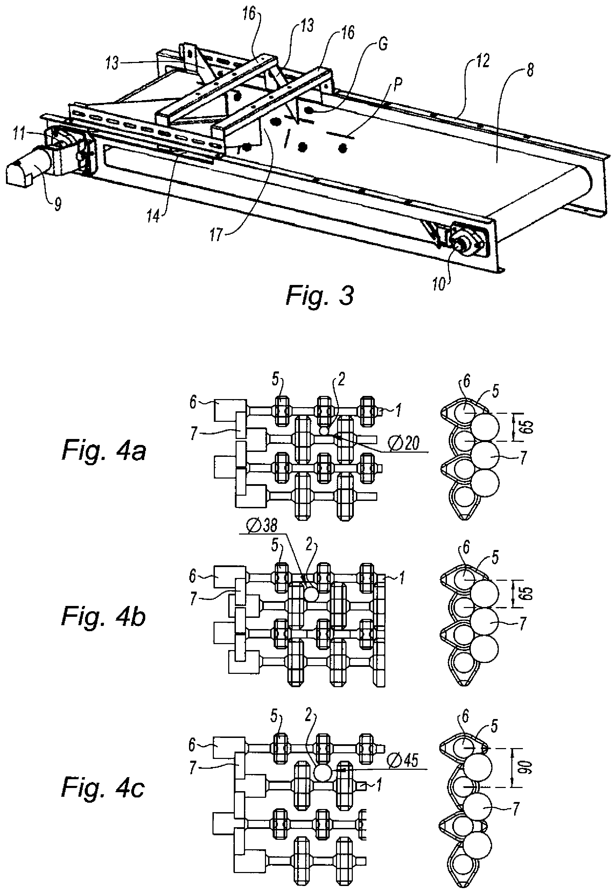

Modifying the distance between centres and the transverse position of four sorter bars 1 the ends of which carry a gear 6, two adjacent gears 6 meshing in rotation via a common drive gear 7, is described with reference to Figure 4.

In Figure 4a, the disposition of the sorter bars 1 is with a nominal distance between centres of 65 mm and with a member 5 positioned in the middle of the free space between two successive members 5 of the adjacent bar 1. In this configuration, longitudinal passages 2 are formed between a member 5 and the adjacent bar 1, the passages having a diameter of 20 mm.

In Figure 4b, alternate sorter bars 1 have been moved transversely to offset the member 5 into the free space between two successive members 5 of the adjacent bar 1. To enable meshing in this offset position, the gears 6 have a transverse dimension sufficient to retain their contact with the drive gear 7. In this configuration, longitudinal and transverse passages 2 are formed between two adjacent members 5 of a respective bar, the passages having a diameter of 38 mm.

In Figure 4c, the distance between centres of the sorter bars 1 is increased to 90 mm to form longitudinal passages 2 with a diameter of 45 mm. Of course, this configuration can be combined with transverse displacement of the sorter bars 1.

There is described hereinafter, in particular with reference to Figure 3, an embodiment of the extraction conveyor including a belt 8 driven by a motor 9 in a longitudinal direction between an upstream roller 10 and a downstream roller 11. The rollers 10, 11 are mounted on a structure 12 associated with the frame 3 of the sorting device, the structure 12 also enabling the assembly of the elimination system into the harvesting machine.

The sorter device is stacked on the conveyor so that the crop portion passing through drops onto the belt 8 and is conveyed by it. Furthermore, the sorting device and the conveyor are mounted one on the other for parallel movement in opposite directions.

The extraction conveyor further includes at least one deflector 13, which may be made out of sheet metal and which is disposed above the belt 8, said deflector being adapted for removing from the belt 8 components other than leaf stalks (petioles) P, in particular grapes G.

Each deflector 13 is disposed downstream of the area in which berries G and leaf stalks P are received onto the belt 8. To this end, the sorting device is mounted in vertical alignment with the upstream area of the belt 8, the downstream area of said belt being equipped with the deflectors 13 and not receiving crop from the sorting device.

The embodiment shown proposes to extract components other than leaf stalks P by making use of the height of said components on the belt 8, said extraction being effected by lateral ejection. Indeed, the leaf stalks P lie flat on the belt 8 and therefore have a height greatly less than that of the grapes G.

To effect this ejection, the deflector 13 is inclined outwardly and rearwardly between the transverse and longitudinal directions, for instance at an angle of 45°, being oriented toward the upstream roller 10. Moreover, the deflector 13 is spaced vertically from the belt 8 by a height sufficient to intercept components other than leaf stalks P. Furthermore, the deflector 13 has a length sufficient to eject said components laterally, off the belt 8.

Although the leaf stalks P are relatively sticky because they have been wetted by the grape juice, the material of the belt 8, in particular the surface which receives the crop portion passing through the sorter device, can be chosen to improve the retention of the leaf stalks P on it. Thus even during ejection of the components other than the leaf stalks P, the latter components are not liable to entrain the leaf stalks P with them. In particular, the material of the belt 8 can be impermeable and relatively soft. Furthermore, the upper surface of the belt 8 can have a grained or similar surface finish.

In one embodiment the conveyor includes at least one set of deflectors 13 adapted to eject components other than leaf stalks P to a respective side of the belt 8. In particular, as shown, the deflectors 13 can be disposed in a V-shape oriented toward the upstream roller 10, each deflector 13 forming one branch of the V-shape.

In the embodiment shown, two sets of deflectors 13 are disposed longitudinally above the belt 8, each deflector 13 of a set being aligned transversely and associated with an edge of the structure 12. Moreover, the structure 12 includes lateral openings 14 for ejecting components intercepted by the deflector 13. Those components include in particular grapes G, which are recovered near the openings 14, either by a conveyor or directly into a crop storage hopper.

Furthermore, the deflectors 13 are held in position relative to the belt 8 by associated cross-members 16 on either side of the structure 12. In particular, a cross-member 16 is provided for each set of deflectors 13, the upper edges of the deflectors 13 of the set being affixed to a cross-member 16.

The sets of deflectors 13 extract components other than the leaf stalks P in two successive steps, each step ejecting components disposed laterally relative to the components ejected in the next step. Thus, ejection is progressive, in particular in order to limit the risks of blocking the lateral openings 14 and of entraining the leaf stalks P as a result of ejecting too many components at a time.

To this end, the upstream set of deflectors 13 has a central opening 17 and the downstream set of deflectors 13 transversely covers substantially all of the belt 8. Alternatively, a plurality of sets of deflectors 13 can be provided with openings of decreasing size in the conveying direction of the belt, to intercept these components in more than two steps.

Also, the elimination system represented includes a scraper 18, in particular produced in a semi-rigid synthetic material, that is associated with the structure 12 to rub on the upper surface of the belt 8 in the vicinity of the downstream roller 11, to eliminate leaf stalks P on said belt.

## Claims

1. A method of eliminating leaf stalks (P) from a harvested stream in a machine for harvesting fruit berries (G), said method successively comprising the steps of:
- feeding the harvested stream to a sorting device through which a stream portion comprising leaf stalks (P) and fruit berries (G) can pass;
- recovering the stream portion passing through the sorting device on a conveyor;
- removing from the conveyor components of the passing through portion other than leaf stalks (P); and
- eliminating leaf stalks (P) remaining on the conveyor,
**characterised in that** the extraction of components of the portion passing through other than leaf stalks (P) is effected by making use of the height of said components on the conveyor.

2. An elimination method according to claim 1, **characterised in that** the extraction of components of the portion passing through other than leaf stalks (P) is effected by lateral ejection.

3. An elimination method according to claim 2, **characterised in that** the extraction of components of the portion passing through other than leaf stalks (P) is effected in successive steps, each step ejecting components disposed laterally relative to components ejected in the next step.

4. A system for implementing the leaf stalks elimination method according to any of the claims 1 to 3, said system comprising:
a sorting device for receiving the harvested stream of fruit berries (G) and through which the stream portion comprising leaf stalks (P) and fruit berries (G) can pass; and
an extraction conveyor disposed under said sorting device for recovering the stream portion passing through the sorting device and removing therefrom the components other than leaf stalks (P), said conveyor comprising a belt (8) driven in a longitudinal direction between an upstream roller (10) and a downstream roller (11),
**characterised in that** said conveyor further comprises at least one deflector (13) disposed above said belt, said deflector being adapted to remove from the belt (8) components other than leaf stalks (P).

5. A system according to claim 4, **characterised in that** the deflector (13) is inclined between the transverse and longitudinal directions, said deflector being spaced from the belt (8) by a height sufficient to intercept components other than leaf stalks (P) and having a length sufficient to eject said components laterally.

6. A system according to claim 5, **characterised in that** the extraction conveyor includes at least one set of deflectors (13), said deflectors being adapted to eject components other than leaf stalks (P) from a respective side of the belt (8).

7. A system according to claim 6, **characterised in that** it includes at least two sets of deflectors (13) distributed longitudinally on the belt (8), the upstream set having a central opening (17) and the downstream set covering transversely substantially all the belt (8).

8. A system according to any of the claims 5 to 7, **characterised in that** the rollers (10, 11) of the belt (8) are mounted on a structure (12) having lateral openings (14) for ejecting components intercepted by the deflector (13).

9. A system according to any of the claims 4 to 8, **characterised in that** said sorting device comprises at least two transverse sorter bars (1) to which a cyclic relative movement is imparted, said movement being adapted to allow longitudinal movement of the stream over said bars while opening passages (2) between them, said passages being adapted to allow detached berries (G) and leaf stalks (P) to drop under said sorting device.

10. A system according to claim 9, **characterised in that** the sorter bars (1) are driven in rotation about a transverse axis, said bars carrying members (5) the exterior envelopes of which are not circular about their rotation axes, the members (5) of two adjacent sorter bars (1) being disposed to cooperate to move the stream longitudinally on said bars by opening passages (2) between them.

11. A system according to claim 10, **characterised in that** the members (5) of a bar (1) are offset angularly and transversely relative to the members (5) of the adjacent bar (1).

12. A system according to claim 11, **characterised in that** passages (2) are formed longitudinally between a member (5) and the adjacent bar (1) and/or transversely between two adjacent members (5) of a respective bar (1).

13. A system according to claim 12, **characterised in that** the geometry of the exterior envelope of the members (5) is inscribed in an ellipse, the members (5) of two adjacent bars (1) being offset angularly by 90° and transversely by a step greater than the transverse dimension of the members (5).

14. A system according to any of the claims 9 to 13, **characterised in that** the distance between centres of the sorter bars (1) can be adjusted in order to modify the geometry of the passages (2).

15. A system according to any of the claims 9 to 14, **characterised in that** the respective transverse positions of the sorter bars (1) can be adjusted in order to modify the geometry of the passages (2).

16. A system according to any of the claims 9 to 15, **characterised in that** the sorter bars (1) are mounted on a frame (3) having a downstream part (3a) that can be inclined relative to an upstream part (3b).

17. A system according to any of the claims 4 to 16, **characterised in that** the sorting device and the extraction conveyor have parallel opposite conveyor directions.

18. An eliminating system according to any of the claims 4 to 17, **characterised in that** it further includes a scraper (18) rubbing on the upper surface of the belt (8) in the vicinity of the downstream roller (11) to eliminate leaf stalks (P) on said belt.

19. A machine for harvesting fruit berries comprising a motorised support structure and a harvesting system mounted on said structure, said harvesting system being adapted to detach the harvest, said machine comprising an elimination system according to any of the claims 4 to 18, which is fed with a harvested stream coming from the harvesting system.

## Patentansprüche

1. Ein Verfahren zum Entfernen von Blattstielen (P) aus einem Erntegutstrom in einer Maschine zum Ernten von Beerenfrüchten (G), wobei das Verfahren aufeinander folgend die folgenden Schritte umfasst:
- Zuführen eines Erntegutstromes zu einer Sortiervorrichtung, durch die ein Erntegutstrom-Teil, der Blattstiele (P) und Beerenfrüchte (G) umfasst, hindurchlaufen kann;
- Auffangen eines durch die Sortiervorrichtung hindurch gelangenden Erntegutstrom-Teils auf einem Förderer;
- Entfernen von anderen Bestandteilen als Blattstielen (p) des hindurch gelangenden Teils von dem Förderer; und
- Beseitigen von Blattstielen (P), die auf dem Förderer verbleiben,
**dadurch gekennzeichnet, dass** die Entfernung von anderen hindurch gelangenden Bestandteilen als Blattstielen (P) unter Ausnutzung der Höhe der Bestandteile auf dem Förderer durchgeführt wird.

2. Ein Verfahren zum Entfernen gemäß Anspruch 1, **dadurch gekennzeichnet, dass** die Entfernung von anderen Bestandteilen als Blattstielen (P) von dem hindurch gelangenden Teil durch ein laterales Auswerfen bewirkt wird.

3. Ein Verfahren zum Entfernen gemäß Anspruch 2, **dadurch gekennzeichnet, dass** die Entnahme von anderen Bestandteilen als Blattstielen (P) von dem hindurch gelangenden Teil in aufeinander folgenden Schritten bewirkt wird, wobei jeder Schritt Bestandteile auswirft, die lateral gegenüber den in dem nächsten Schritt ausgeworfenen Bestandteilen angeordnet sind.

4. Ein System zur gerätemäßigen Ausführung des Verfahrens zum Entfernen von Blattstielen gemäß irgendeinem der Ansprüche 1 bis 3, wobei das System Folgendes umfasst:
eine Sortiervorrichtung zum Empfang des geernteten Stromes von Beerenfrüchten (G), durch die der Erntegutstrom-Teil, der Blattstiele (P) und Beerenfrüchte (G) umfasst, hindurch gelangen kann; und
einen Auffang-Förderer, der unter der Sortiereinrichtung angeordnet ist, um den durch die Sortiereinrichtung hindurch gelangenden Erntegutstrom-Teil aufzufangen und um von diesem andere als Blattstiele (P) darstellende Bestandteile zu entfernen, wobei der Förderer ein Förderband (8) umfasst, das in einer Längsrichtung zwischen einer stromaufwärts gelegenen Walze (10) und einer stromabwärts gelegenen Walze (11) angetrieben wird, und
**dadurch gekennzeichnet, dass** der Förderer weiterhin zumindest eine Ablenkeinrichtung (13) aufweist, die oberhalb des Förderbandes angeordnet ist, wobei die Ablenkeinrichtung zur Entfernung von anderen Bestandteilen als Blattstielen (P) von dem Förderband (8) ausgebildet ist.

5. Ein System nach Anspruch 4, **dadurch gekennzeichnet, dass** die Ablenkeinrichtung (13) zwischen den Quer- und Längsrichtungen geneigt ist, wobei die Ablenkeinrichtung in einer Höhe in Abstand von dem Förderband (8) angeordnet ist, die ausreicht, um andere Bestandteile als Blattstiele (P) abzufangen, und eine Länge aufweist, die ausreicht, um die Bestandteile seitlich auszuwerfen.

6. Ein System nach Anspruch 5, **dadurch gekennzeichnet, dass** der Auffang-Förderer zumindest einen Satz von Ablenkeinrichtungen (13) einschließt, wobei die Ablenkeinrichtungen zum Auswerfen von anderen Bestandteilen als Blattstielen von einer jeweiligen Seite des Förderbandes (8) ausgebildet sind.

7. Ein System nach Anspruch 6, **dadurch gekennzeichnet, dass** es zumindest zwei Sätze von Ablenkeinrichtungen (13) einschließt, die in Längsrichtung auf dem Förderband (8) verteilt sind, wobei der stromaufwärts gelegene Satz eine Mittelöffnung (17) aufweist und der stromabwärts gelegene Satz in Querrichtung im Wesentlichen das gesamte Förderband (8) abdeckt.

8. Ein System nach einem der Ansprüche 5 bis 7, **dadurch gekennzeichnet, dass** die Walzen (10, 11) des Förderbandes (8) auf einer Struktur (12) befestigt sind, die laterale Öffnungen (14) zum Auswerfen der von der Ablenkeinrichtung (13) ausgeworfenen Bestandteile aufweist.

9. Ein System nach einem der Ansprüche 4 bis 8, **dadurch gekennzeichnet, dass** die Sortiereinrichtung zumindest zwei sich in Querrichtung erstreckende Sortierstangen (1) umfasst, denen eine zyklische Relativbewegung erteilt wird, wobei die Bewegung so ausgebildet ist, dass eine Längsbewegung des Erntegutstromes über die Stangen ermöglicht wird, während Durchgänge (2) zwischen diesen Stangen geöffnet werden, wobei die Durchgänge so ausgebildet sind, dass sie es abgetrennten Beeren (G) und Blattstielen (P) ermöglichen, unter die Sortiereinrichtung zu fallen.

10. Ein System nach Anspruch 9, **dadurch gekennzeichnet, dass** die Sortierstangen (1) um eine Querachse herum in Drehung versetzt werden, dass die Stangen Bauteile (5) tragen, deren äußere Umfänge nicht kreisförmig um ihre Drehachsen sind, dass die Bauteile (5) von zwei benachbarten Sortierstangen (1) so angeordnet sind, dass sie zusammenwirken, um den Erntegutstrom in Längsrichtung auf den Stangen zu bewegen, indem Durchgänge zwischen diesen geöffnet werden.

11. Ein System nach Anspruch 10, **dadurch gekennzeichnet, dass** die Bauteile einer Stange (1) winkelmäßig und in Querrichtung gegenüber den Bauteilen (5) der benachbarten Stange versetzt sind.

12. Ein System nach Anspruch 11, **dadurch gekennzeichnet, dass** die Durchgänge (2) in Längsrichtung zwischen einem Bauteil (5) und der benachbarten Stange (1) und/oder in Querrichtung zwischen zwei benachbarten Bauteilen (5) einer jeweiligen Stange gebildet werden.

13. Ein System nach Anspruch 12, **dadurch gekennzeichnet, dass** die Geometrie des äußeren Umrisses der Bauteile (5) in einer Ellipse eingeschrieben ist, wobei die Bauteile (5) von zwei benachbarten Stangen (1) winkelmäßig um 90° Grad und in Querrichtung durch eine Stufe ersetzt sind, die größer als die Querabmessung der Bauteile (5) ist.

14. Ein System nach einem der Ansprüche 9 bis 13, **dadurch gekennzeichnet, dass** der Abstand zwischen den Mittelpunkten der Sortierstangen (1) einstellbar ist, um die Geometrie der Durchgänge (2) zu modifizieren.

15. Ein System nach einem der Ansprüche 9 bis 14, **dadurch gekennzeichnet, dass** die jeweiligen Querpositionen der Sortierstangen (1) einstellbar sind, um die Geometrie der Durchgänge (2) zu modifizieren.

16. Ein System nach einem der Ansprüche 9 bis 15, **dadurch gekennzeichnet, dass** die Sortierstangen (1) auf einen Rahmen befestigt sind, der einen stromabwärts gelegenen Teil (3a) aufweist, der gegenüber einem stromaufwärts gelegenen Teil (3b) neigbar ist.

17. Ein System nach irgendeinem der Ansprüche 4 bis 16, **dadurch gekennzeichnet, dass** die Sortiereinrichtung und der Auffang-Förderer parallele jedoch entgegengesetzte Richtungen aufweisen.

18. Ein System zum Entfernen gemäß irgendeinem der Ansprüche 4 bis 17, **dadurch gekennzeichnet, dass** es weiterhin einen Abstreifer (18) einschließt, der auf der oberen Oberfläche des Förderbandes (8) in der Nähe der stromabwärts gelegenen Walze (11) reibt, um Blattstiele (P) auf dem Förderband zu beseitigen.

19. Eine Maschine zum Ernten von Fruchtbeeren, die eine motorisierte Tragstruktur und ein Erntesystem umfasst, das auf der Struktur befestigt ist, wobei das Erntesystem zum Abtrennen der Ernte ausgebildet ist, wobei die Maschine ein System zur Entfernung nach irgendeinem der Ansprüche 4 bis 18 umfasst, das mit einem Erntegutstrom gespeist wird, der von dem Erntesystem kommt.

## Revendications

1. Procédé d'élimination de queues (P) à partir d'un flux récolté dans une machine de récolte de baies (G), ledit procédé comprenant les étapes successives consistant à :
- délivrer le flux récolté à un dispositif de tri à travers lequel une partie du flux comprenant des queues (P) et des baies (G) peut passer,
- récupérer la partie qui est passée au travers du dispositif de tri sur un convoyeur,
- retirer du convoyeur les composants de la partie qui a traversé autres que les queues (P), et
- éliminer les queues (P) qui restent sur le convoyeur,
**caractérisé en ce que** l'extraction des composants de la partie qui a traversé autres que les queues (P) est effectuée en utilisant la hauteur des dits composants sur le convoyeur.

2. Procédé d'élimination selon la revendication 1, **caractérisé en ce que** l'extraction des composants de la partie qui a traversé autres que les queues (P) est effectuée par éjection latérale.

3. Procédé d'élimination selon la revendication 2, **caractérisé en ce que** l'extraction des composants de la partie qui a traversé autres que les queues (P) est effectuée dans des étapes successives, chaque étape éjectant des composants disposés latéralement par rapport aux composants éjectés dans la prochaine étape.

4. Système pour exécuter le procédé d'élimination de queues selon l'une quelconque des revendications 1 à 3, ledit système comprenant :
un dispositif de tri pour recevoir le flux récolté de baies (G) et au travers duquel la partie de flux comprenant des queues (P) et des baies (G) peut passer, et
un convoyeur d'extraction disposé sous le dispositif de tri pour récupérer la partie du flux passée au travers du dispositif de tri et retirer de celle-ci les composants autres que les queues (P), ledit convoyeur comprenant un tapis (8) entraîné dans une direction longitudinale entre un rouleau amont (10) et un rouleau aval (11),
**caractérisé en ce que** ledit convoyeur comprend en plus au moins un déflecteur (13) disposé au-dessus du dit tapis, ledit déflecteur étant adapté pour retirer du tapis (8) des composants autres que des queues (P).

5. Système selon la revendication 4, **caractérisé en ce que** le déflecteur (13) est incliné entre les directions transversale et longitudinale, ledit déflecteur étant espacé du tapis (8) d'une hauteur suffisante pour intercepter des composants autres que des queues (P) et ayant une longueur suffisante pour éjecter les dits composants latéralement.

6. Système selon la revendication 5, **caractérisé en ce que** le convoyeur d'extraction inclut au moins un jeu de déflecteurs (13), les dits déflecteurs étant adaptés pour éjecter des composants autres que des queues (P) depuis un côté respectif du tapis (8).

7. Système selon la revendication 6, **caractérisé en ce qu'**il comprend au moins deux jeux de déflecteurs (13) répartis longitudinalement sur le tapis (8), le jeu amont comportant une ouverture centrale (17) et le jeu aval couvrant transversalement sensiblement tout le tapis (8).

8. Système selon l'une quelconque des revendications 5 à 7, **caractérisé en ce que** les rouleaux (10, 11) du tapis (8) sont montés sur une structure (12) comportant des ouvertures latérales (14) pour éjecter des composants interceptés par le déflecteur (13).

9. Système selon l'une quelconque des revendications 4 à 8, **caractérisé en ce que** ledit dispositif de tri comprend au moins deux barres trieuses transversales (1) auxquelles un mouvement relatif cyclique est transmis, ledit mouvement étant adapté pour permettre un mouvement longitudinal du flux par delà lesdites barres en ouvrant des passages d'ouverture (2) entre elles, lesdits passages étant adaptés pour permettre à des baies (G) et des queues (P) détachées de tomber sous ledit dispositif de tri.

10. Système selon la revendication 9, **caractérisé en ce que** les barres trieuses (1) sont entraînées en rotation autour d'un axe transversal, lesdites barres portant des éléments (5) dont les enveloppes extérieures ne sont pas circulaires autour de leurs axes de rotation, les éléments (5) de deux barres trieuses adjacentes (1) étant agencés de façon à coopérer pour déplacer le flux longitudinalement sur les dites barres en ouvrant les passages (2) entre elles.

11. Système selon la revendication 10, **caractérisé en ce que** les éléments (5) d'une barre (1) sont décalés angulairement et transversalement par rapport aux éléments (5) de la barre adjacente (1).

12. Système selon la revendication 11, **caractérisé en ce que** des passages (2) sont formés longitudinalement entre un élément (5) et la barre adjacente (1) et/ou transversalement entre deux éléments adjacents (5) d'une barre respective (1).

13. Système selon la revendication 12, **caractérisé en ce que** la géométrie de l'enveloppe extérieure des éléments (5) s'inscrit dans une ellipse, les éléments (5) de deux barres adjacentes (1) étant décalés angulairement de 90° et transversalement d'un pas supérieur à la dimension transversale des éléments (5).

14. Système selon l'une quelconque des revendications 9 à 13, **caractérisé en ce que** la distance entre les centres des barres trieuses (1) peut être réglée pour modifier la géométrie des passages (2).

15. Système selon l'une quelconque des revendications 9 à 14, **caractérisé en ce que** les positions transversales respectives des barres trieuses (1) peuvent être réglées pour modifier la géométrie des passages (2).

16. Système selon l'une quelconque des revendications 9 à 15, **caractérisé en ce que** les barres trieuses (1) sont montées sur un bâti (3) ayant une partie aval (3a) qui peut être inclinée par rapport à une partie amont (3b).

17. Système selon l'une quelconque des revendications 4 à 16, **caractérisé en ce que** le dispositif de tri et le convoyeur d'extraction ont des directions de convoyeur parallèles opposées.

18. Système d'élimination selon l'une quelconque des revendications 4 à 17, **caractérisé en ce qu'**il comprend en plus un racleur (18) frottant sur la surface supérieure du tapis (8) à proximité du rouleau aval (11) pour éliminer les queues (P) sur ledit tapis.

19. Machine de récolte de baies comprenant une structure de support motorisée et un système de récolte monté sur ladite structure, ledit système de récolte étant adapté pour détacher la récolte, ladite machine comprenant un système d'élimination selon l'une quelconque des revendications 4 à 18, qui est alimenté avec un flux récolté provenant du système de récolte.
